# EUROPEAN PATENT SPECIFICATION

(11) **EP 1 576 302 B1**
(45) Date of publication and mention of the grant of the patent: **06.08.2008**
(21) Application number: 02808319.4
(22) Date of filing: 24.12.2002
(51) Int. Cl.: F16D 65/16

(54) **PISTON FOR A BRAKE**
BREMSKOLBEN
PISTON POUR FREIN

(43) Date of publication of application: 21.09.2005
(73) Proprietor: Freni Brembo S.p.A., 24035 Curno (Bergamo) (IT)
(72) Inventor: CRIPPA, Cristian, I-24031 Almenno San Salvatore (Bergamo) (IT); PAGNI, Marco, I-20065 Inzago (Milano) (IT)
(74) Representative: Crippa, Paolo Ernesto
(86) International application number: PCT/IT2002/000830
(87) International publication number: WO 2004/059188

(56) References cited:
- EP-A- 0 042 156
- WO-A-97/18403
- DE-A- 2 854 247
- FR-A- 2 495 252
- GB-A- 2 089 914
- US-A- 5 988 044

## Description

The present invention concerns a thrust device of a brake, in particular of a disk brake. In particular, the present invention concerns a piston suitable for use with the caliper of a brake, for example a disk brake.

Thrust devices of this type are known from EP-A-0 042 156, DE2854247, FR2495252, US5988044, GB2089914.

The piston of a brake generally consists of a substantially cylindrical member acted on at one end by the brake fluid, so as to co-operate, by the opposite end, for example in a disk brake, with the brake pad, thrusting it towards the braking surface of the disk.

Some embodiments provide for a piston consisting of several parts in order to improve, for each one, the performance of its own specific function. An exemplary embodiment is illustrated in US Patent No. 5.845.747.

Especially in the more extreme applications, or in those applications which provide, in the course of braking, for the generation of a significant amount of heat, there is still the unfulfilled requirement of limiting the amount of heat transmitted to the brake fluid.

It is in fact known that, disadvantageously, in some applications, the brake fluid can reach temperatures close to boiling temperature, compromising the functioning of the entire brake.

The problem underlying the present invention is that of devising a thrust device of a brake which has structural and functional characteristics such as to fulfil the aforesaid requirements.

This problem is solved by a thrust device according to claim 1. Other embodiments of the invention are described by the dependent claims.

Further characteristics and advantages of the thrust device according to the present invention will become clear from the following description of one of its preferred, non-limiting exemplary embodiments, wherein:

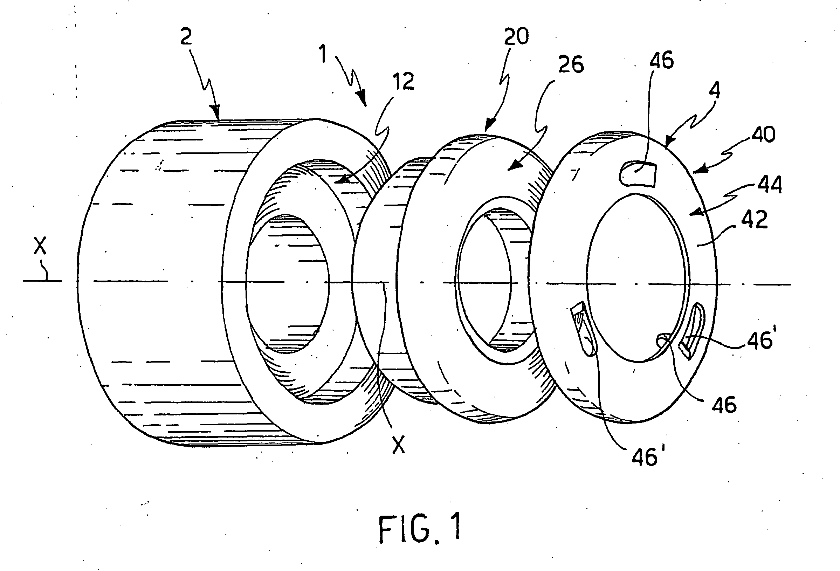

Figure 1 shows an axonometric exploded view of the thrust device according to the invention;

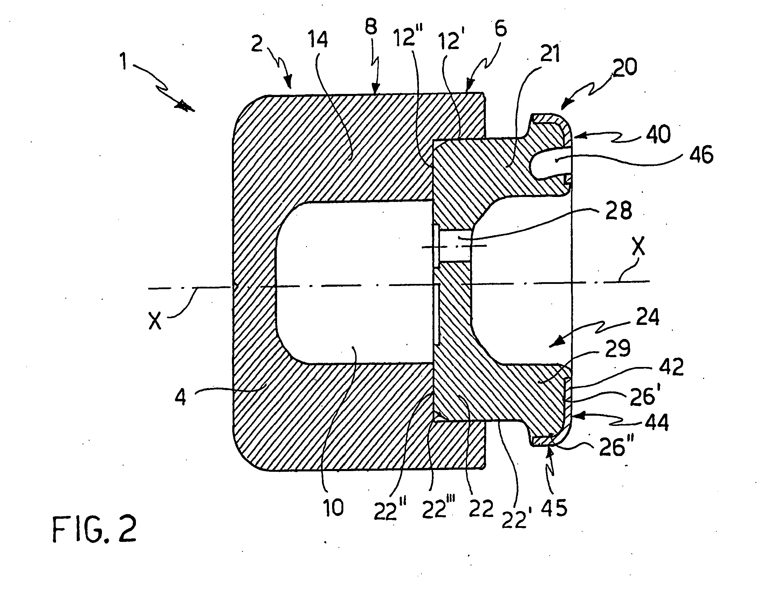

Figure 2 shows a cross-section of the thrust device of Figure 1, in a plane comprising the longitudinal axis X-X of Figure 1, and
Figure 3 shows a partially sectional view of a caliper of a brake comprising the thrust device of Figure 1.

With reference to the appended Figures, the reference 1 indicates as a whole a thrust device of a brake, in particular of a disk brake.

Said thrust device, generally referred to as a piston, comprises a piston body 2 which extends along a longitudinal axis X-X, between a bottom wall 4 and an end portion 6, opposed to said bottom wall 4.

In a preferred embodiment, said piston body is provided by a cylindrical member which extends along the longitudinal axis X-X with a tubular wall 8 which encloses a cavity 10, preferably coaxial with said cylindrical member.

In other words, said piston body has the shape of a cup, provided with the bottom wall 4 and open at the end portion 6, opposed to said bottom wall.

The end portion 6 provides an annular seat 12, formed by an annular projection 14 which, in a preferred embodiment, extends as far as said bottom wall 4.

The annular seat 12 has a guiding and coupling surface 12', substantially cylindrical and extending along said longitudinal axis X-X, and an abutment surface 12", connected to said guiding and coupling surface 12' and preferably lying in a plane perpendicular to said longitudinal axis X-X.

Preferably, said piston body 2 is made of metallic material.

According to a further embodiment, said piston body 2 is made of cast iron. According to yet a further embodiment, said piston body 2 is made of aluminium alloy.

Said piston further comprises an insert member 20, provided with an insert base 22 and with a coupling portion 24, equipped with an annular surface 26 opposed to said insert base 22.

In other words, said insert member 20 is provided by a cylindrical member having an annular lateral wall 21 which extend between the insert base 22 and the coupling portion 24.

The insert base 22 has a complementary guiding and coupling surface 22', partially extending along the annular lateral wall 21, substantially cylindrical and extending, in a coupling configuration with said piston body 2, along the longitudinal axis X-X of said piston body. The complementary guiding and coupling surface 22' is connected to a complementary abutment surface 22", preferably lying, in the configuration coupling the insert member 20 with said piston body 2, in a plane perpendicular to the longitudinal axis X-X.

In a preferred embodiment, said complementary guiding and coupling surface 22' is connected to the complementary abutment surface 22" by means of an annular chamfer surface 22'".

The insert base 22 of the insert member 20 is suitable for mating with the end portion 6 of said piston body 2.

In particular, in the configuration coupling the insert member 20 with the piston body 2, said insert base 22 is at least partially received in the annular seat 12 of the piston body 2.

In said coupling configuration, the complementary abutment surface 22" of the insert member 20 faces the abutment surface 12" of the annular seat 12, while the complementary guiding and coupling surface 22' faces the guiding and coupling surface 12' of the annular seat 12.

Said insert member 20 is preferably spaced longitudinally from said bottom wall 4 of the piston body 2. In other words, said insert member 20 is detached longitudinally from said bottom wall 4 of the piston body 2.

In a preferred embodiment, said insert base 22 has at least one hole 28.

The coupling portion 24 of the insert member 20 is mushroom-shaped. In other words, said coupling portion 24 has an annular crown 29 which protrudes radially with respect to the annular lateral wall 21 of said insert member.

Said annular crown 29 has, at the annular surface 26, a profile provided by the connection of a front head surface 26', substantially lying in a plane perpendicular to the longitudinal axis X-X, and a lateral head surface 26", substantially cylindrical and extending along the longitudinal axis X-X.

In a preferred embodiment, said insert member 20 is made of synthetic material, preferably a plastic resin.

According to a preferred embodiment, said insert member 20 is made of a phenolic resin, preferably heat-setting.

In a further embodiment, said insert member 20 is made of a ceramic material.

Preferably, said insert member 20 is made of zirconium oxide or of steatite.

The thrust device 1 further comprises a guard member 40 provided with a free thrust surface 42.

The guard member 40 mates with the insert member 20, at least partially covering the annular surface 26 of the coupling portion 24 thereof.

Preferably, said guard member 40 mates with said insert member 20, partially covering the front head surface 26' and/or the lateral head surface 26" of said insert member 20.

In other words, said guard member 40 provides a front portion 44 which lies substantially in a plane which, in a configuration coupling said guard member 40 with said insert member 20, is substantially perpendicular to said longitudinal axis X-X.

Said front portion 44 at least partially covers said front head surface 26' of the insert member 20.

Moreover, said guard member 40 provides a lateral portion 45, connected to said front portion 44.

Said lateral portion 45 at least partially covers said lateral head surface 26" of the insert member 20.

The front portion 44 of the guard member 40 has tongues 46 projecting therefrom, or extending substantially outside the plane in which said front portion 44 lies.

The tongues 46 are preferably obtained by shearing of the front portion 44 of said guard member 40 and subsequent bending.

Preferably, said tongues 46 are substantially parallel to said longitudinal axis X-X of the piston body 2.

Said front portion 44 further has windows 46', corresponding to each of said tongues 46 sheared from said front portion 44.

In a preferred embodiment, in the configuration coupling said guard member 40 with said insert member 20, said tongues 46 are embedded in the coupling portion 24 of the insert member 20.

In a further embodiment, said tongues 46 are embedded in the coupling portion 24 of the insert member 20 so that said windows 46' are full of the material of which said insert member 20 is made. Preferably, said tongues 46 are three in number.

The method of manufacture of said thrust device 1 provides for a step in which said guard member 40, provided with said bent tongues 46, is inserted into a mould. Into said mould is injected the plastics material of which the insert member 20 is made.

According to a further alternative embodiment, said mould is filled with plastics material, for example in granule or paste form, subjected to a process of transformation by the application of heat suitable for producing a compact mass which envelops the tongues 46 of the guard member 40.

In an assembled configuration of said thrust device 1, the piston body 2 is coupled to the insert member 20.

In particular, the complementary abutment surface 22" of the insert member 20 faces the abutment surface 12" of the annular seat 12, while the complementary guiding and coupling surface 22' faces the guiding and coupling surface 12' of the annular seat 12 of the piston body 2.

The complementary abutment surface 22" of the insert member 20 and the abutment surface 12" of the annular seat 12 of the piston body 2 form thrust means capable, during braking, of absorbing the thrust of the insert member 20 towards the piston body 4.

The complementary guiding and coupling surface 22' and the guiding and coupling surface 12' of the annular seat 12 of the piston body 2 form positioning means, capable of correctly positioning said insert member 20 with respect to said piston body 2.

Moreover, in the assembled configuration of said thrust device 1, the insert member 20 is coupled to the guard member 40.

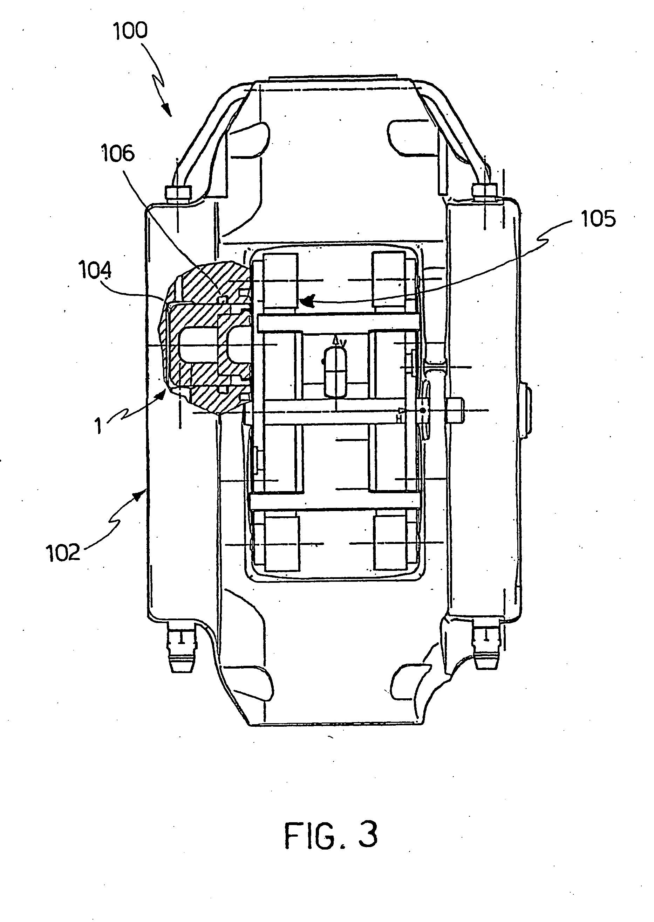

In a mounted configuration of a disk brake, said thrust device 1 is associated with a caliper 100 (Figure 3), comprising a caliper body 102.

Each thrust device 1 is received in a respective seat or cylinder 104 provided in said caliper body 102.

The cylinder 104 of the caliper body 102 is fluid-dynamically connected to a hydraulic circuit containing brake fluid.

In a preferred embodiment, said cylinder 104 of the caliper body 102 provides sealing means 106 capable of preventing the drawing out of brake fluid.

Said sealing means preferably comprise a ring seat and a sealing ring that can be associated therewith.

Said sealing means co-operate with the tubular wall 8 of said piston body 2.

During braking, an increase in the pressure of the brake fluid in the cylinder 104 of the caliper body 102, generated by the actuation of suitable means such as a brake pump, brings about an advance of the thrust device 1 which acts on friction means 105, capable of producing a braking action.

Said friction means, in a preferred embodiment, comprise a pad 105 of a disk brake, suitable for producing the braking action on a braking band of a disk.

During braking, an increase in the pressure of the brake fluid in the cylinder 104 of the caliper body 102, generated by the actuation of suitable means such as a brake pump, brings about an advance of the thrust device 1 which acts on said pad 105.

In particular, the bottom wall 4 of the piston body 2 is acted on by said brake fluid.

At the same time, the bottom wall 4 of the piston body 2 provides a hindrance to contact between the insert base 22 of the insert member 20 and the brake fluid so as to hinder, at least partially, the transmission to said brake fluid of the heat generated during braking.

The heat generated during braking by the friction between the friction material of the pad and the braking band of the disk is transmitted at least partially through the pad itself to the thrust device 1 and, through the latter, to the brake fluid contained in the cylinder 104 and in the hydraulic circuit of the brake.

The bottom wall 4 of the piston body 2 comes between said brake fluid and said insert member which carries the guard member 40 in contact with the pad, hindering the transmission of heat to the brake fluid.

Moreover, advantageously, said insert member 20 is longitudinally spaced from said bottom wall 4.

During braking, the guard member 40 of said thrust device 1 co-operates with the friction means, for example with the pad 105, to effect braking, coming between the insert member 20 and the pad 105.

Advantageously, said insert member 20, made of ceramic material, light and capable of hindering the transmission of heat, but fragile at ambient temperature, is protected by said guard member from impacts and abrasions harmful to the structure of said insert member.

Unusually, said thrust device limits the amount of heat transmitted to the brake fluid during braking.

Moreover, advantageously, said piston body prevents contact between the brake fluid, which has very pronounced characteristics of chemical aggressiveness, and the insert member of plastics material.

According to a further advantageous feature, said piston body has a cavity, capable of limiting the flow of heat towards the brake fluid.

Moreover, advantageously, said piston body is made of metallic material, easy to work and capable of cooperating with the sealing means in order to prevent the drawing out of brake fluid.

According to a further advantageous feature, said insert member is made of ceramic material, light, capable of limiting the transmission of heat to said piston body and capable of resisting high temperatures.

A further advantageous feature consists in providing a guard member, capable of absorbing impacts and abrasions which would otherwise damage said insert member.

In particular, according to a further advantageous feature, said guard member, during maintenance work which provides for the extraction of the piston and its subsequent insertion into the cylinder, prevents impact between the insert member thereof and the tools used from damaging said insert member.

According to a further advantageous feature, said guard member is coupled to the insert member by means of tongues embedded in the latter, capable of providing stable and secure coupling even at high temperatures.

Advantageously, the holes provided through the insert base of the insert member are capable of discharging the heated air retained in the cavity of the piston body.

It is clear that an expert in the field, in order to fulfil contingent and specific requirements, may apply numerous modifications and variants to the thrust device described above.

In a further alternative embodiment, the insert member and the piston body are coupled by respective conical or frustoconical surfaces.

In yet another alternative embodiment, the tongues of the guard member are embedded in the insert member by being arranged in a direction not parallel to the longitudinal axis of the piston body.

According to a still further alternative embodiment, said guard member 40 is provided with variously inclined protruding tongues.

In other words, said tongues, with respect to the plane in which the front portion of the guard member lies, are inclined at different angles for each tongue or for groups thereof.

Advantageously, said configuration of the tongues allows a not easily removed connection to the insert member. Between said tongues and said insert member undercut portions of material are produced which render the connection effective and long-lasting.

It is clear that such variants are also to be understood as being included within the scope of protection of the invention as defined by the following claims

## Claims

1. A thrust device (1) of a brake, in particular of a disk brake, comprising:
- a piston body (2) which extends along a longitudinal axis (XX) between a bottom wall (4) intended, during braking, to be acted upon by a brake fluid, and an end portion (6) opposed to said bottom wall (4);
- said piston body has the shape of a cup, provided with the bottom wall (4) and open at the end portion (6), opposed to said bottom wall delimiting a cavity (10);
- an insert member (20), provided with an insert base (22) capable of mating with the end portion (6) of said piston body (2), said insert member (20) being further provided with a coupling portion (24) equipped with a surface (26) opposed to said insert base (22);
- said bottom wall (4) of said piston body (2) providing a hindrance to contact between the insert base (22) of said insert member (20) and said brake fluid so as to hinder, at least partially, the transmission to said brake fluid of the heat generated during braking;
- said insert member (20) is provided by a cylindrical portion having an annular lateral wall (21) which extends between the insert base (22) and the coupling portion (24);
**characterised in that**
- said insert member (20) has a cup shaped body with lateral wall (21) equipped with an annular surface (26) opposed to the insert base (22);
- said insert base (22) has at least one hole (28);
- said at least one hole (28) provided through the insert base (22) of the insert member (20) is capable of discharging the heated air retained in the cavity (10) of the piston body (2);
and **in that**
- the device comprises a guard member (40) at least partially covering said surface (26) of said coupling portion (24) of the insert member (20) and equipped with a thrust surface (42) which, during braking, co-operates with friction means (105) of the brake to effect braking, coming between said insert member (20) and said friction means (105);
- said guard member (40) **mates** with the insert member (20), covering the annular surface (26) of the coupling portion (24) thereof;
- said guard member (40) provides a front portion (44) which lies substantially in a plane which, in a configuration coupling said guard member (40) with said insert member (20), is substantially perpendicular to said longitudinal axis X-X.

2. A thrust device (1) according to claim 1, wherein said insert member (20) is longitudinally spaced with respect to the bottom wall (4) of said piston body (2).

3. A thrust device (1) according to any one of the preceding claims, wherein said piston body is made of metallic material.

4. A thrust device (1) according to any one of the preceding claims, wherein said piston body co-operates with sealing means (106) capable of preventing the drawing out of said brake fluid.

5. A thrust device (1) according to any one of the preceding claims, wherein said piston body has an annular seat (12) at said end portion (6) suitable for at least partially receiving said insert base (22).

6. A thrust device according to any one of the preceding claims, wherein said piston body has a longitudinal cavity (10).

7. A thrust device (1) according to any one of the preceding claims, wherein said insert member is made of plastics material.

8. A thrust device (1) according to claim 7,
wherein said plastics material is a heat-setting resin.

9. A thrust device (1) according to claim 8,
wherein said plastics material is a phenolic resin.

10. A thrust device (1) according to one of claims 1 to 6, wherein said insert member is made of ceramic material.

11. A thrust device (1) according to any one of the preceding claims, wherein said coupling portion (24) of the insert member (20) has an annular crown (29) protruding radially with respect to an annular lateral wall (21) of said insert member (20).

12. A thrust device (1) according to any one of the preceding claims, wherein said coupling portion (24) of the insert member (20) has a front head surface (26') and a lateral head surface (26").

13. A thrust device (1) according to any one of the preceding claims, wherein said guard member (40) is made of metallic material.

14. A thrust device according to claim 1 wherein said front portion (44) at least partially covers a front head surface (26') of the coupling portion (24) of the insert member (20).

15. A thrust device (1) according to claim 14,
wherein said guard member (40) has tongues (46) protruding from said front portion (44).

16. A thrust device (1) according to claim 15,
wherein said tongues (46) are substantially parallel to said longitudinal axis (XX).

17. A thrust device (1) according to claim 15,
wherein said tongues (46) are variously inclined.

18. A device according to any one of claims 15 to 17,
wherein said tongues (46) are embedded in said guard member (40).

19. A device according to any one of claims 1 to 18,
wherein said front portion (44) has windows (46').

20. A device according to claim 19 and any one of claims 15 to 18, wherein said tongues (46) are obtained by shearing and, when bent, leave said windows (46') on said front portion (44) of the guard member (40).

21. A device according to claim 19 or 20, wherein said windows (46') are filled by the material of said insert member (20).

22. A thrust device according to any one of the preceding claims, wherein said guard member (40) comprises a lateral portion (45) which at least partially covers a lateral head surface (26") of the coupling portion (24) of the insert member (20).

23. A thrust device (1) according to any one of the preceding claims, wherein said piston body (2) provides guide means for said device capable of guiding said device in a cylinder (104) of a caliper body (102) towards said friction means (105) of the brake during braking.

24. A thrust device (1) according to any one of the preceding claims, wherein said friction means comprise at least one pad (105) of a disk brake.

25. A thrust device (1) according to claim 24,
wherein said guard member (40) comes between said insert member (20) and said pad (105).

26. A caliper for a brake, in particular for a disk brake, provided with a cylinder (104) and a thrust device (1) according to any one of the preceding claims.

27. A caliper according to claim 29, wherein said cylinder (104) is equipped with sealing means (106).

28. A caliper according to claim 29 or 30, comprising at least one pad (105) thrust towards a braking band of a disk by said thrust device (1).

29. A brake, in particular a disk brake, comprising a thrust device (1) according to any one of claims 1 to 25.

30. A brake, in particular a disk brake, comprising a caliper according to any one of claims 26 to 28.

## Patentansprüche

1. Eine Schubvorrichtung (1) einer Bremse, insbesondere einer Scheibenbremse, die folgende Merkmale umfasst:
einen Kolbenkörper (2), der sich entlang einer longitudinalen Achse (XX) zwischen einer unteren Wand (4), die dafür vorgesehen ist, dass während des Bremsens durch eine Bremsflüssigkeit auf dieselbe eingewirkt wird, und einem Endabschnitt (6) erstreckt, der der unteren Wand (4) gegenüber liegt;
wobei der Kolbenkörper die Form einer Schale hat, mit der unteren Wand (4) versehen ist und an dem Endabschnitt (6), der der unteren Wand gegenüber liegt, offen ist und einen Hohlraum (10) begrenzt;
ein Einsatzbauglied (20), das mit einer Einsatzbasis (22) versehen ist, die mit dem Endabschnitt (6) des Kolbenkörpers (2) zusammenpassen kann, wobei das Einsatzbauglied (20) ferner mit einem Kopplungsabschnitt (24) versehen ist, der mit einer Oberfläche (26) ausgestattet ist, die der Einsatzbasis (22) gegenüber liegt;
wobei die untere Wand (4) des Kolbenkörpers (2) ein Hindernis darstellt für einen Kontakt zwischen der Einsatzbasis (22) des Einsatzbauglieds (20) und der Bremsflüssigkeit, um zumindest teilweise die Übertragung der Wärme, die während des Bremsens erzeugt wird, zu der Bremsflüssigkeit zu verhindern;
wobei das Einsatzbauglied (20) durch einen zylindrischen Abschnitt bereitgestellt wird, der eine ringförmige seitliche Wand (21) aufweist, die sich zwischen der Einsatzbasis (22) und dem Kopplungsabschnitt (24) erstreckt;
**dadurch gekennzeichnet, dass**
das Einsatzbauglied (20) einen schalenförmigen Körper mit einer seitlichen Wand (21) aufweist, die mit einer ringförmigen Oberfläche (26) ausgestattet ist, die der Einsatzbasis (22) gegenüber liegt;
die Einsatzbasis (22) zumindest ein Loch (28) aufweist;
das zumindest eine Loch (28), das durch die Einsatzbasis (22) des Einsatzbauglieds (20) vorgesehen ist, in der Lage ist, die erwärmte Luft, die in dem Hohlraum (10) des Kolbenkörpers (2) gehalten wird, zu entladen;
und **dadurch**, dass
die Vorrichtung ein Schutzbauglied (40) umfasst, das zumindest teilweise die Oberfläche (26) des Kopplungsabschnitts (26) des Einsatzbauglieds (20) bedeckt, und mit einer Schuboberfläche (42) ausgestattet ist, die während des Bremsens mit der Reibungseinrichtung (105) der Bremse zusammenarbeitet, um Bremsen zu bewirken, wobei dasselbe zwischen das Einsatzbauglied (20) und das Reibungsbauglied (105) kommt;
das Schutzbauglied (40) mit dem Einsatzbauglied (20) zusammenpasst, und die ringförmige Oberfläche (26) des Kopplungsabschnitts (24) desselben bedeckt;
das Schutzbauglied (40) einen Vorderabschnitt (44) bereitstellt, der im Wesentlichen in einer Ebene liegt, die bei einer Konfiguration, die das Schutzbauglied (40) mit dem Einsatzbauglied (20) koppelt, im Wesentlichen senkrecht zu der longitudinalen Achse X-X ist.

2. Eine Schubvorrichtung (1) gemäß Anspruch 1, bei der das Einsatzbauglied (20) bezüglich der unteren Wand (4) des Kolbenkörpers (2) longitudinal beabstandet ist.

3. Eine Schubvorrichtung (1) gemäß einem der vorhergehenden Ansprüche, bei der der Kolbenkörper aus Metallmaterial hergestellt ist.

4. Eine Schubvorrichtung (1) gemäß einem der vorhergehenden Ansprüche, bei der der Kolbenkörper mit einer Abdichtungseinrichtung (106) zusammenwirkt, die in der Lage ist, das Herausziehen der Bremsflüssigkeit zu verhindern.

5. Eine Schubvorrichtung (1) gemäß einem der vorhergehenden Ansprüche, bei der der Kolbenkörper einen ringförmigen Sitz (12) an dem Endabschnitt (6) aufweist, der dafür geeignet ist, die Einsatzbasis (22) zumindest teilweise aufzunehmen.

6. Eine Schubvorrichtung gemäß einem der vorhergehenden Ansprüche, bei der der Kolbenkörper einen longitudinalen Hohlraum (10) aufweist.

7. Eine Schubvorrichtung (1) gemäß einem der vorhergehenden Ansprüche, bei der das Einsatzbauglied aus Kunststoffmaterial hergestellt ist.

8. Eine Schubvorrichtung (1) gemäß Anspruch 7, bei der das Kunststoffmaterial ein Thermofixierungsharz ist.

9. Eine Schubvorrichtung (1) gemäß Anspruch 8, bei der das Kunststoffmaterial ein Phenolharz ist.

10. Eine Schubvorrichtung (1) gemäß einem der Ansprüche 1 bis 6, bei der das Einsatzbauglied aus Keramikmaterial hergestellt ist.

11. Eine Schubvorrichtung (1) gemäß einem der vorhergehenden Ansprüche, bei der der Kopplungsabschnitt (24) des Einsatzbauglieds (20) eine ringförmige Krone (29) aufweist, die bezüglich einer ringförmigen seitlichen Wand (21) des Einsatzbauglieds (20) radial hervorsteht.

12. Eine Schubvorrichtung (1) gemäß einem der vorhergehenden Ansprüche, bei der der Kopplungsabschnitt (24) des Einsatzbauglieds (20) eine vordere Kopfoberfläche (26') und eine seitliche Kopfoberfläche (26") aufweist.

13. Eine Schubvorrichtung (1) gemäß einem der vorhergehenden Ansprüche, bei der das Schutzbauglied (40) aus Metallmaterial hergestellt ist.

14. Eine Schubvorrichtung (1) gemäß einem der vorhergehenden Ansprüche, bei der der Vorderabschnitt (44) zumindest teilweise eine vordere Kopfoberfläche (26') des Kopplungsabschnitts (24) des Einsatzbauglieds (20) bedeckt.

15. Eine Schubvorrichtung (1) gemäß Anspruch 14, bei der das Schutzbauglied (40) Zungen (46) aufweist, die von dem Vorderabschnitt (44) vorstehen.

16. Eine Schubvorrichtung (1) gemäß Anspruch 15, bei der die Zungen (46) im Wesentlichen parallel zu der longitudinalen Achse (XX) sind.

17. Eine Schubvorrichtung (1) gemäß Anspruch 15, bei der die Zungen (46) verschieden geneigt sind.

18. Eine Vorrichtung gemäß einem der Ansprüche 15 bis 17, bei der die Zungen (46) in das Schutzbauglied (40) eingebettet sind.

19. Eine Vorrichtung gemäß einem der Ansprüche 1 bis 18, bei der der Vorderabschnitt (44) Fenster (46') aufweist.

20. Eine Vorrichtung gemäß Anspruch 19 und einem der Ansprüche 15 bis 18, bei der die Zungen (46) durch Scheren erhalten werden, und wenn dieselben gebogen sind, die Fenster (46') auf dem Vorderabschnitt (44) des Schutzbauglieds (40) verlassen.

21. Eine Vorrichtung gemäß Anspruch 19 oder 20, bei der die Fenster (46') mit dem Material des Einsatzbauglieds (20) gefüllt sind.

22. Eine Schubvorrichtung gemäß einem der vorhergehenden Ansprüche, bei der das Schutzbauglied (40) einen seitlichen Abschnitt (45) umfasst, der zumindest teilweise eine seitliche Kopfoberfläche (26") des Kopplungsabschnitts (24) des Einsatzbauglieds (20) bedeckt.

23. Eine Schubvorrichtung (1) gemäß einem der vorhergehenden Ansprüche, bei der der Kolbenkörper (2) eine Führungseinrichtung für die Vorrichtung bereitstellt, die in der Lage ist, die Vorrichtung während des Bremsens in einem Zylinder (104) eines Sattelkörpers (102) zu der Reibungseinrichtung (105) der Bremse zu führen.

24. Eine Schubvorrichtung (1) gemäß einem der vorhergehenden Ansprüche, bei der die Reibungseinrichtung zumindest einen Belag (105) einer Scheibenbremse umfasst.

25. Eine Schubvorrichtung (1) gemäß Anspruch 24, bei der das Schutzbauglied (40) zwischen das Einsatzbauglied (20) und den Belag (105) kommt.

26. Ein Sattel für eine Bremse, insbesondere für eine Scheibenbremse, der mit einem Zylinder (104) und einer Schubvorrichtung (1) gemäß einem der vorhergehenden Ansprüche versehen ist.

27. Ein Sattel gemäß Anspruch 26, bei dem der Zylinder (104) mit einer Abdichtungseinrichtung (106) ausgestattet ist.

28. Ein Sattel gemäß Anspruch 26 oder 27, der zumindest einen Belag (105) umfasst, der durch die Schubvorrichtung (1) zu einem Bremsband einer Scheibe geschoben wird.

29. Eine Bremse, insbesondere eine Scheibenbremse, die eine Schubvorrichtung (1) gemäß einem der Ansprüche 1 bis 25 umfasst.

30. Eine Bremse, insbesondere eine Scheibenbremse, die einen Sattel gemäß einem der Ansprüche 26 bis 28 umfasst.

## Revendications

1. Dispositif d'application de pression (1) d'un frein, plus particulièrement d'un frein à disque, comportant :
- un corps de piston (2) s'étendant sur un axe longitudinal (XX) entre une paroi de fond (4) conçue, en cours de freinage, pour être sollicitée par un liquide de frein, et une partie terminale (6) opposée à ladite paroi de fond (4) ;
- ledit corps de piston a une forme de coupelle et est muni de la paroi de fond (4) et il est ouvert au niveau de la partie terminale (6), opposée à ladite paroi de fond délimitant une cavité (10) ;
- un élément d'insert (20), muni d'une base d'insert (22) capable de s'accoupler avec la partie terminale (6) dudit corps de piston (2), ledit élément d'insert (20) étant en outre muni d'une partie d'accouplement (24) équipée d'une surface (26) opposée à ladite base de l'insert (22);
- ladite paroi de fond (4) dudit corps de piston (2) empêchant d'établir le contact entre la base de l'insert (22) dudit élément d'insert (20) et ledit liquide de frein, de manière à empêcher, au moins partiellement, la transmission de la chaleur générée en cours de freinage audit liquide de frein;
- ledit élément d'insert (20) est formé d'une partie cylindrique ayant une paroi latérale annulaire (21) s'étendant entre la base de l'insert (22) et la partie d'accouplement (24) ;
**caractérisé en ce que:**
- ledit élément d'insert (20) a un corps en forme de coupelle avec la paroi latérale (21) équipée d'une surface annulaire (26) opposée à la base de l'insert (22);
- ladite base de l'insert (22) comporte au moins un trou (28) ;
- ledit au moins un trou (28) formé à travers la base de l'insert (22) de l'élément d'insert (20) est capable de décharger l'air chaud retenu dans la cavité (10) du corps de piston (2) ;
et **en ce que**:
- le dispositif comprend un élément de protection (40) couvrant au moins partiellement ladite surface (26) de ladite partie d'accouplement (24) de l'élément d'insert (20) et qui est équipé d'une surface d'application de pression (42) qui, en cours de freinage, coopère avec un moyen de friction (105) du frein pour mettre en oeuvre le freinage, venant s'insérer entre ledit élément d'insert (20) et ledit moyen de friction (105);
- ledit élément de protection (40) s'accouple avec l'élément d'insert (20), en couvrant la surface annulaire (26) de la partie d'accouplement (24) de celui-ci;
- ledit élément de protection (40) forme une partie frontale (44) reposant sensiblement dans un plan qui, dans une configuration de couplage dudit élément de protection (40) et dudit élément d'insert (20), est sensiblement perpendiculaire audit axe longitudinal X-X.

2. Dispositif d'application de pression (1) selon la revendication 1, dans lequel ledit élément d'insert (20) est espacé dans le sens longitudinal de la paroi de fond (4) dudit corps de piston (2).

3. Dispositif d'application de pression (1) selon l'une quelconque des revendications précédentes, dans lequel ledit corps de piston est constitué d'un matériau métallique.

4. Dispositif d'application de pression (1) selon l'une quelconque des revendications précédentes, dans lequel ledit corps de piston coopère avec un moyen d'étanchéité (106) capable d'empêcher l'extraction dudit liquide de frein.

5. Dispositif d'application de pression (1) selon l'une quelconque des revendications précédentes, dans lequel ledit corps de piston a un siège annulaire (12) au niveau de ladite partie terminale (6) approprié pour y loger au moins partiellement ladite base de l'insert (22).

6. Dispositif d'application de pression selon l'une quelconque des revendications précédentes, dans lequel ledit corps de piston a une cavité longitudinale (10).

7. Dispositif d'application de pression (1) selon l'une quelconque des revendications précédentes, dans lequel ledit élément d'insert est constitué de matière plastique.

8. Dispositif d'application de pression (1) selon la revendication 7, dans lequel ladite matière plastique est une résine thermoformable.

9. Dispositif d'application de pression (1) selon la revendication 8, dans lequel ladite matière plastique est une résine phénolique.

10. Dispositif d'application de pression (1) selon l'une des revendications 1 à 6, dans lequel ledit élément d'insert est constitué d'un matériau de céramique.

11. Dispositif d'application de pression (1) selon l'une quelconque des revendications précédentes, dans lequel ladite partie d'accouplement (24) de l'élément d'insert (20) a une couronne annulaire (29) faisant saillie dans le sens radial par rapport à une paroi latérale annulaire (21) dudit élément d'insert (20).

12. Dispositif d'application de pression (1) selon l'une quelconque des revendications précédentes, dans lequel ladite partie d'accouplement (24) de l'élément d'insert (20) a une surface de tête frontale (26') et une surface de tête latérale (26").

13. Dispositif d'application de pression (1) selon l'une quelconque des revendications précédentes, dans lequel ledit élément de protection (40) est constitué de matériau métallique.

14. Dispositif d'application de pression selon l'une quelconque des revendications précédentes, dans lequel ladite partie frontale (44) couvre au moins partiellement une surface de tête frontale (26') de la partie d'accouplement (24) de l'élément d'insert (20).

15. Dispositif d'application de pression (1) selon la revendication 14, dans lequel ledit élément de protection (40) comporte des languettes (46) dépassant de ladite partie frontale (44).

16. Dispositif d'application de pression (1) selon la revendication 15, dans lequel lesdites languettes (46) sont sensiblement parallèles audit axe longitudinal (XX).

17. Dispositif d'application de pression (1) selon la revendication 15, dans lequel lesdites languettes (46) sont diversement inclinées.

18. Dispositif selon l'une quelconque des revendications 15 à 17, dans lequel lesdites languettes (46) sont encastrées dans ledit élément de protection (40).

19. Dispositif selon l'une quelconque des revendications 1 à 18, dans lequel ladite partie frontale (44) comporte des fenêtres (46').

20. Dispositif selon la revendication 19 et l'une quelconque des revendications 15 à 18, dans lequel lesdites languettes (46) sont obtenues par cisaillement et, lorsqu'elles sont recourbées, laissent apparaître lesdites fenêtres (46') sur ladite partie frontale (44) de l'élément de protection (40).

21. Dispositif selon les revendications 19 ou 20, dans lequel lesdites fenêtres (46') sont remplies par le matériau dudit élément d'insert (20).

22. Dispositif d'application de pression selon l'une quelconque des revendications précédentes, dans lequel ledit élément de protection (40) comporte une partie latérale (45) qui couvre au moins partiellement une surface de tête latérale (26") de la partie d'accouplement (24) de l'élément d'insert (20).

23. Dispositif d'application de pression (1) selon l'une quelconque des revendications précédentes, dans lequel ledit corps de piston (2) forme un moyen de guidage pour ledit dispositif capable de guider ledit dispositif dans un cylindre (104) d'un corps d'étrier (102) en direction dudit moyen de friction (105) du frein, en cours de freinage.

24. Dispositif d'application de pression (1) selon l'une quelconque des revendications précédentes, dans lequel ledit moyen de friction comporte au moins un patin (105) de frein à disque.

25. Dispositif d'application de pression (1) selon la revendication 24, dans lequel ledit élément de protection (40) vient s'insérer entre ledit élément d'insert (20) et ledit patin (105).

26. Étrier pour frein, plus particulièrement pour frein à disque, muni d'un cylindre (104) et dispositif d'application de pression (1) selon l'une quelconque des revendications précédentes.

27. Étrier selon la revendication 29, dans lequel ledit cylindre (104) est équipé d'un moyen d'étanchéité (106).

28. Étrier selon la revendication 29 ou 30 comprenant au moins un patin (105) poussé en direction d'une bande de freinage d'un disque par ledit dispositif d'application de pression (1).

29. Frein, plus particulièrement frein à disque, comprenant un dispositif d'application de pression (1) selon l'une quelconque des revendications 1 à 25.

30. Frein, plus particulièrement frein à disque, comprenant un étrier selon l'une quelconque des revendications 26 à 28.
